# EUROPEAN PATENT APPLICATION

(11) **EP 1 065 637 A2**
(43) Date of publication of application: **03.01.2001**
(21) Application number: 00113410.5
(22) Date of filing: 23.06.2000
(51) Int. Cl.: G07F 19/00

(54) **Ticket transfer program, method, system, and program medium**

(30) Priority: 28.06.1999 JP 18106099
(71) Applicant: Hitachi, Ltd., Chiyoda-ku, Tokyo 101-8010 (JP)
(72) Inventor: Osaki, Nobuyuki, Hitachi, Ltd., Intel. Prop. Group, Chiyoda-ku, Tokyo 100-8220 (JP); Kawano, Takaishi, Hitachi, Ltd., Int. Prop. Group, Chiyoda-ku, Tokyo 100-8220 (JP); Kagami, Akira, Hitachi, Ltd., Intell. Prop. Group, Chiyoda-ku, Tokyo 100-8220 (JP); Tashiro, Tsutomu, Hitachi, Ltd., Int. Prop. Group, Chiyoda-ku, Tokyo 100-8220 (JP); Noyama, Hideo, Hitachi, Ltd., Intell. Prop. Group, Chiyoda-ku, Tokyo 100-8220 (JP)
(74) Representative: Strehl Schübel-Hopf & Partner

(57) **Abstract**

The reserved or purchased ticket is managed by use of the table (106). The table (106) receives from the ticket transfer request acceptance unit (104) the ticket to be transferred as well as the transferee identification data. When correct transferee identification data is entered into the transferred ticket receive request acceptance unit (114), the table (106) changes the owner of the reserved or purchased ticket using a purchaser identification data inputted by the transferee. Renewed identification data, instead of the ticket purchaser identification data related with the ticket, may be sent to a gate of a hall as an admittance condition for a person carrying the ticket to enter the hall.

## Description

### BACKGROUND OF THE INVENTION

The present invention relates to a system for selling concert or movie tickets to consumers over telephone and more particularly to a ticket transfer method and a ticket purchase confirmation method incorporated in a ticket selling system. A specification WO 91/16691, JP-A-10-6388 and "Case Study e-ticket.net," Nikkei Multimedia, Jan. 1999 disclose a value transfer system and an e-ticket.

Tickets for concerts and transport means have conventionally been sold at ticket selling counters of a selling agent or railway station in the form of printed paper tickets.

In a ticket booking service via network, one can apply to a reservation center for booking a ticket as by telephone. To make a purchase of the ticket itself, the consumer is required to go to the ticket selling counter before he or she can use it.

As for the tickets not made from paper, there is an electronic ticket technology that manages tickets as electronic information. For example, an "Electronic Ticket System and Method of Using Electronic Tickets in the System" of JP-A-10-63884 discloses an electronic ticket that stores ticket information in a medium such as IC card. In the electronic ticket technology and also in the electronic money technology, the consumers are generally required to carry a special device such an as IC card.

The electronic ticket technology that does not require a dedicated device is what is called an e-ticket, reported on page 122 of Nikkei Multimedia, 99/1/00 issue. The e-ticket allows the consumer to buy a ticket via the Internet and download an electronic ticket onto a floppy disc. The consumer presents the floppy disk at the entrance of a concert hall for admission.

The tickets for concerts and transport means have conventionally been sold at ticket selling counters of a selling agent or a station in the form of printed paper ticket. Consumers are required to go to the ticket selling counter to receive the ticket before they can use it, which is inconvenient for the consumers. The "Electronic Ticket System and Method of Using Electronic Tickets in the System" of JP-A-10-63884 and the e-ticket do not realize the transfer of ticket.

In order for the transfer technology of the electronic money to be applied to using of the electronic ticket, a card dedicated to electronic ticket must be used. That is, the consumer is required to register his or her personal information as by obtaining the membership for ticket purchase and obtain a dedicated card or medium for storing the ticket. This requirement represents a severe drawback in promoting the sale of tickets to non-member consumers.

### SUMMARY OF THE INVENTION

An object of the present invention is to provide a ticket sales information management method and system that enable one to sell or transfer tickets to general consumers without requiring them to make a prior registration of membership.

Another object of the present invention is to provide a technology for realizing a transfer to another person of tickets for concerts, sports events and travels without requiring a consumer to take the trouble of obtaining a membership before he or she can use the tickets.

A further object of the present invention is to provide a system that can send, from a sales management computer to an event site, data for authorizing the admission of a person to whom the ticket has been transferred.

According to the invention there is provided a ticket sales management program for computers that comprises the steps of:
according to a ticket purchase request, relating a ticket with ticket purchaser identification data and then storing them;
according to a ticket transfer request entered by the ticket purchaser, relating transferee identification data 112 with the ticket;
according to an input from a transferee of a receive request a ticket number and personal identification data, checking whether the personal identification data is assigned to the ticket; and
when the result of the above check step indicates that the personal identification data is included in the transferee identification data related with the ticket, assigning a purchaser identification data of the transferee inputted by the transferee to the ticket purchaser identification data related with the ticket to authenticate the transferee.

The ticket transfer can be realized by the following processing. A ticket and first data identifying a ticket purchaser are related with each other and recorded; second input data is accepted from outside and a person represented by the second input data is authenticated, based on the first data, to be the ticket purchaser; when the authentication is successful, an input of a ticket purchaser change condition contained in the second input data is related with the ticket purchaser and recorded; third input data is accepted from outside and a check is made of whether the third input data meets the ticket purchaser change condition; when the change condition verification processing decides that the ticket purchaser change condition is satisfied, the ticket purchaser change condition that is met and the ticket purchaser recorded linked with the ticket purchaser change condition are erased from the record; and when the correct ticket purchaser change condition is presented, the change of the ticket purchaser is permitted.

### BRIEF DESCRIPTION OF THE DRAWINGS

The present invention will be more apparent from the following detailed description when taken in conjunction with the accompanying drawings, in which:
Figure 1 is a schematic diagram showing a ticket sales information management apparatus in a first embodiment of the invention;
Figure 2 is a schematic diagram showing the ticket sales information management apparatus in the first embodiment of the invention and its position;
Figure 3 is a schematic diagram showing a ticket sales information management apparatus in a second embodiment of the invention.
Figure 4 is a schematic diagram showing a ticket sales information management apparatus in a third embodiment of the invention;
Figure 5 is a flow chart showing a ticket transfer request processing performed by a computer 101 in a ticket sales center in the first embodiment of the invention;
Figure 6 is a flow chart showing a ticket receipt processing performed by a computer 101 in a ticket sales center in the first embodiment of the invention;
Figure 7 is a flow chart showing a ticket transfer request processing performed by a computer 101 in a ticket sales center in the first embodiment of the invention; and
Figure 8 is a flow chart showing a ticket receipt processing performed by a computer 101 in a ticket sales center in the first embodiment of the invention.

### DESCRIPTION OF THE EMBODIMENTS

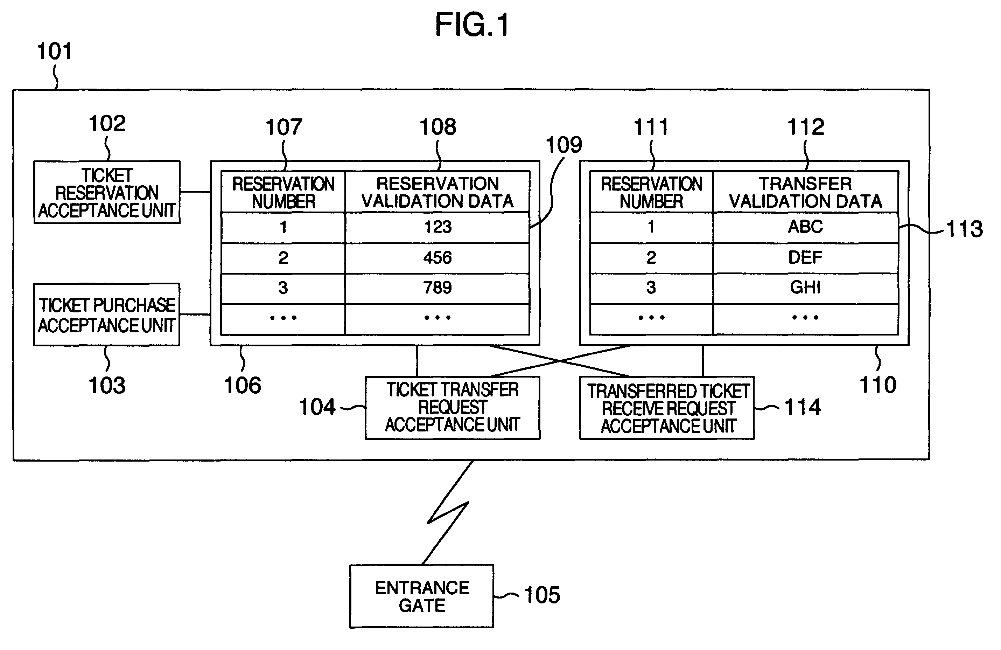

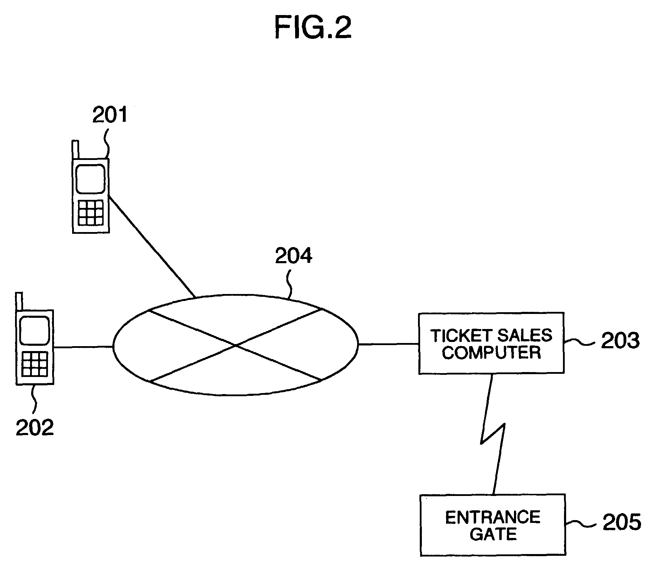

Embodiments of the present invention will be described by referring to the accompanying drawings. Figure 1 explains how a reserved ticket is transferred in the first embodiment of the invention. This embodiment will be described in detail with reference to Figure 1. Before going into detail, let us briefly explain about the ticket sale by referring to Figure 2.

In this embodiment, a ticket for a concert to be held in a hall is taken as an example. Here the ticket refers to a means which verifies that a consumer carrying that ticket has the right to enter the concert hall. The ticket is not limited to the concert but may be a verification means for admitting the person into a site off-limits to unauthorized persons.

Denoted 201 is a communication means held by a consumer AA. Although a cellular phone is shown as an example of the communication means, it may be any arbitrary means as long as it can communicate with a computer 203 or an operator of it for ticket sale, such as ordinary telephone, FAX, computer and terminal at the sales counter. Reference 203 represents a ticket sales computer that performs ticket reservation and sale. Designated 204 is a means for connecting the communication means 201 and the ticket sales computer 203. Denoted 205 is an entrance gate of a concert hall.

The procedure for a consumer AA to buy a ticket and enter the concert hall will be as follows.

First, using the communication means 201, the consumer AA will access the ticket sales computer 203 for ticket reservation and then again access the ticket sales computer 203 to buy the booked ticket over the communication means. At the entrance gate 205 of the concert hall, the consumer AA shows the ticket before entering the hall.

This is the outline procedure for ticket booking and purchase and for the entering into the concert hall. Although this embodiment takes up a case for explanation in which the consumer books a ticket prior to purchasing it, this does not mean that the invention is limited to a ticket sales system that requires booking.

When the consumer AA reserves a ticket according to the procedure explained above, the consumer AA may want to transfer the reservation to a consumer BB. In that case, the consumer AA reports the ticket reservation transfer to the ticket sales computer 203. Then the consumer BB accesses the ticket sales computer 203 via a communication means 202 to obtain the right of the ticket reservation that was originally owned by the consumer AA. This is the outline of the procedure for ticket reservation transfer. The consumer BB to whom the ticket reservation has been transferred will access the ticket sales computer 203 to electronically buy the reserved ticket. Then, at the entrance gate 205 of the concert hall, the consumer BB electronically or optically presents the ticket to the terminal or shows it to a clerk and now can enter the concert hall.

By referring to Figure 1, the procedure for the ticket reservation and purchase and for the entering into the concert hall and also the procedure for ticket reservation transfer will be explained in detail. First, let us explain about the procedure for the ticket reservation and purchase and for the entering into the concert hall. Designated 101 is a computer used for selling tickets which is shown at 203 in Figure 2. Denoted 102 is a ticket reservation acceptance unit for accepting a ticket reservation request from a consumer using a communication means. Denoted 103 is a ticket purchase acceptance unit for accepting a ticket purchase request from a consumer using a communication means. Denoted 105 is an entrance gate corresponding to 205 in Figure 2.

The ticket reservation acceptance unit 102, upon receiving a ticket reservation request from a consumer AA, issues a reservation number to the consumer AA, relates the reservation number with reservation validation data and manages them in the form of a table 106. The reservation number is data that uniquely identities reservations of a plurality of consumers, and the reservation validation data is data used by the ticket purchase acceptance unit 103 to check, when the consumer AA purchases the ticket specified by the reservation number, that the consumer AA is an authorized consumer to whom the reservation number was issued. For example, the name and date of birth of the consumer AA may be used as the reservation validation data. The reservation validation data may be proposed by the consumer AA to the ticket reservation acceptance unit 102 or it may be issued from the ticket reservation acceptance unit 102 to the consumer. In either case, the consumer AA who is given a reservation number must know the reservation validation data before he buys the ticket. The reservation number and the reservation validation data do not need to be separated from each other for management. They may be connected and handled as one data. The table 106 stores the reservation numbers in a column 107 and the reservation validation data 108 in a column 108, indicating that they are related to each other.

The ticket purchase acceptance unit 103 accepts a ticket purchase request from the consumer AA who has already made a reservation. The ticket purchase acceptance unit 103 accepts the reservation number and the reservation validation data the consumer AA presents, checks the table 106 to see whether they are related and, if so, gives the consumer AA the right to purchase the ticket.

Suppose, for example, a line 109 in the table 106 represents the reservation number and the reservation validation data of the consumer AA. The consumer AA presents to the ticket purchase accepting means 103 "1" as the reservation number and "123" as the reservation validation data. Upon confirming that "1" and "123" stored in the table 106 are related to each other, the ticket purchase accepting means 103 gives the consumer AA the right to purchase.

The consumer AA who is given the right to buy the ticket pays the ticket fee to the ticket selling company or tie-up financier through any means, such as e-commerce and bank payment.

When entering the concert hall, the consumer AA, as described later, presents the purchased ticket to the entrance gate 105 by some method to prove that the he or she has the right to enter the concert hall.

The above is the procedure for the ticket reservation and purchase and for the entering into the concert hall.

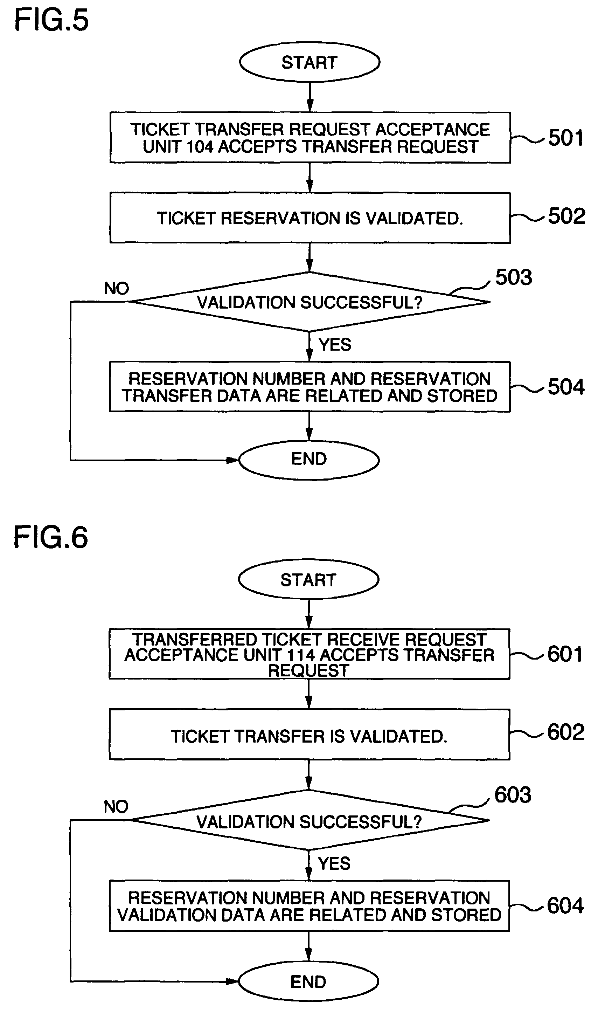

Next, the procedure for the ticket reservation transfer will be described. Figures 5 and 6 represent ticket transfer request acceptance processing and transferred ticket receive request acceptance processing performed by the ticket sales computer 101.

Suppose the consumer AA has already reserved a ticket. When the consumer AA wishes to transfer the reservation to a consumer BB, the following process is followed to transfer the right of the reservation.

First, the consumer AA uses a communication means (such as 201 in Figure 2) to apply to a ticket transfer request acceptance unit 104 for a ticket transfer. The ticket transfer request acceptance unit 104 accepts the ticket transfer request from the consumer AA. This corresponds to 501 in Figure 5.

Next, at step 502, the computer, based on the reservation number and the reservation validation data of the consumer AA, checks that the ticket reservation has been done correctly.

Then if step 503 decides that the verification is successfully completed, step 504 stores the reservation number and transfer validation data to be described later in columns 111 and 112 of a table 110 by relating them to each other. If, after the consumer AA has transferred the reservation to the consumer BB, the reservation of the consumer AA is to be invalidated, the pair of the reservation number and the reservation validation data is deleted from the table 106.

The transfer validation data may be proposed by the consumer AA to the ticket sales computer or it may be generated from a random number table or dictionary/counter by the ticket sales computer and issued to the consumer AA.

When the validation fails at step 503, the ticket transfer request acceptance processing is aborted.

Next, the consumer BB who has agreed to the ticket reservation transfer from the consumer AA accesses the ticket sales computer using a communication means (e.g., 202 in Figure 2) to send to the transferred ticket receive request acceptance unit 114 the reservation number and the transfer validation data that the consumer BB has been notified of by the consumer AA. The transferred ticket receive request acceptance unit 114 accepts a transferred ticket receive request from the consumer BB (601 in Figure 6).

Next, at step 602 the transferred ticket receive request acceptance unit 114 checks the table 110 to see whether the reservation number and the transfer validation data are related to each other and thereby confirms that the consumer in question is a legitimate person to receive the ticket.

When step 603 decides that the validation at step 602 is successfully completed, the transferred ticket receive request acceptance unit 114 at step 604 relates the reservation number with the reservation validation data (explained later) of the consumer BB and registers them with the table 106.

The reservation validation data of the consumer BB may be proposed by the consumer BB to the ticket sales computer or it may be generated by the ticket sales computer and issued to the consumer BB.

When step 603 decides that the validation fails at step 602, the transferred ticket receive request acceptance processing is aborted. The procedure for transferring the ticket purchasing right has been explained above.

The consumer BB to whom the ticket reservation has been transferred can buy the ticket and enter the concert hall according to the procedure for the ticket reservation and purchase and for the entering into the concert hall.

In this embodiment, the reservation validation data and transfer validation data and the reservation number are logically distinguished in order to uniquely identify the consumer BB to whom the reservation is transferred. If the consumer BB can be uniquely identified, there is no need to use the reservation number.

Further, as another embodiment, the ticket number may be used instead of the reservation number.

As described above, according to this embodiment, the reservation validation data and the transfer validation data are used to allow only a ticket reservation holder and a person knowing the transfer validation data to request a ticket transfer and to receive a transferred ticket, respectively. It is therefore possible to realize a system in which the reserved ticket can only be transferred to a person who is informed of the transfer validation data by the ticket reservation holder wishing to transfer the ticket purchasing right.

Further, a person to whom the reservation is transferred need only have the transfer validation data, to be able to request a reservation transfer, request a transferred ticket, and validate the transfer. These can be done without the consumer having to become a member in advance. That is, if the transfer validation data is not used for validating the ticket reservation transfer, a person to whom the transfer is to be made is specified by using the person's name or personal number that are already registered for membership. In this case, the transfer service can only be extended to those who have a membership of the service. On the other hand, the use of the transfer validation data allows the transfer service to be provided also to non-members. Thus, the reserved ticket transfer service is not limited only to the members. As can be understood from the above description, it is possible to give an organizer who plans the ticket sales strategy universality and flexibility of the ticket.

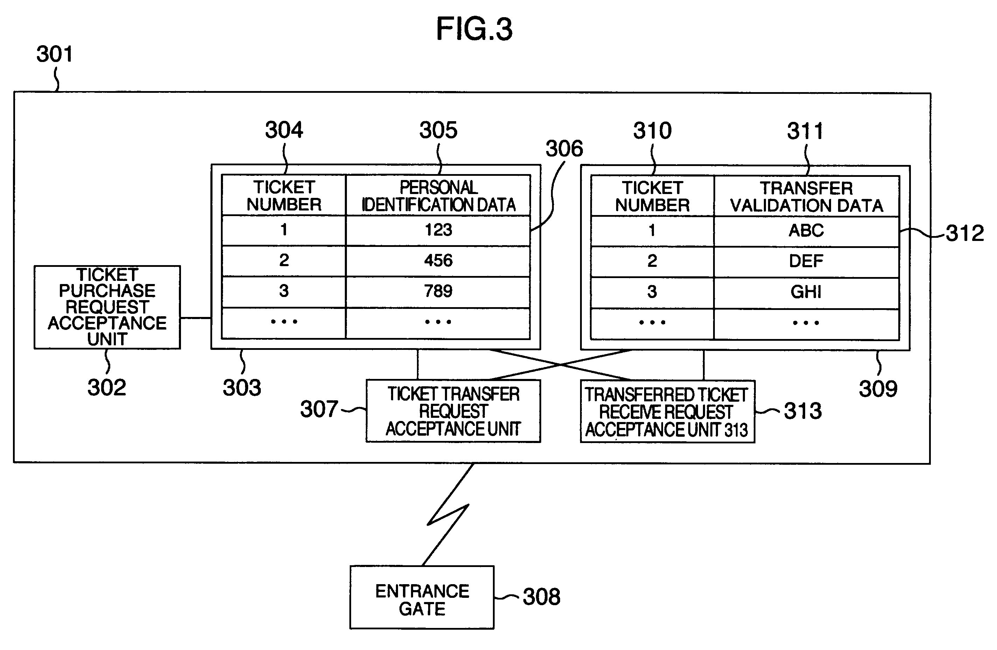

Next, a second embodiment of the invention will be described in detail by referring to Figure 3.

While the first embodiment is concerned with the method of transferring a ticket reservation, this embodiment concerns a method of transferring a purchased ticket. In this embodiment, too, a concert ticket is taken as an example.

In Figure 3, reference number 301 represents a ticket sales computer 301 that corresponds to 203 of Figure 2. Designated 308 is an entrance gate corresponding to 205 of Figure 2. Denoted 302 is a ticket purchase request acceptance unit that accepts a ticket purchase request from a consumer who uses a communication means.

In this embodiment, personal identification data stored in the ticket sales computer 203 is used as a ticket, a means to certify that a consumer carrying it has the right to enter a concert hall. That is, let us consider a case in which the consumer presents his or her personal identification data at the entrance gate 205 of the concert hall for admission.

The procedure for the consumer to buy a ticket and enter the concert hall is as follows.

First, when a consumer AA accesses a ticket purchase request acceptance unit 302 and purchases a ticket electronically or through bank payment, the personal identification data that identifies the consumer AA at the gate 308 is registered in the table 303 by the ticket purchase request acceptance unit 302. In Figure 3, suppose the personal identification data of the consumer AA is "123." When the consumer AA passes through the gate 308, the consumer AA presents "123" as the personal identification data. The gate 308 references the table 303 to check whether the personal identification data "123" exists and, if so, permits the consumer AA to pass through the gate.

The personal identification data may be proposed by the consumer AA to the ticket purchase request acceptance unit 302 or may be issued by the ticket purchase request acceptance unit 302 to the consumer AA.

The personal identification data is managed by being related to a ticket number, the data that uniquely identifies the ticket. The table 303 shows that the ticket number 304 and the personal identification data 305 are related to each other.

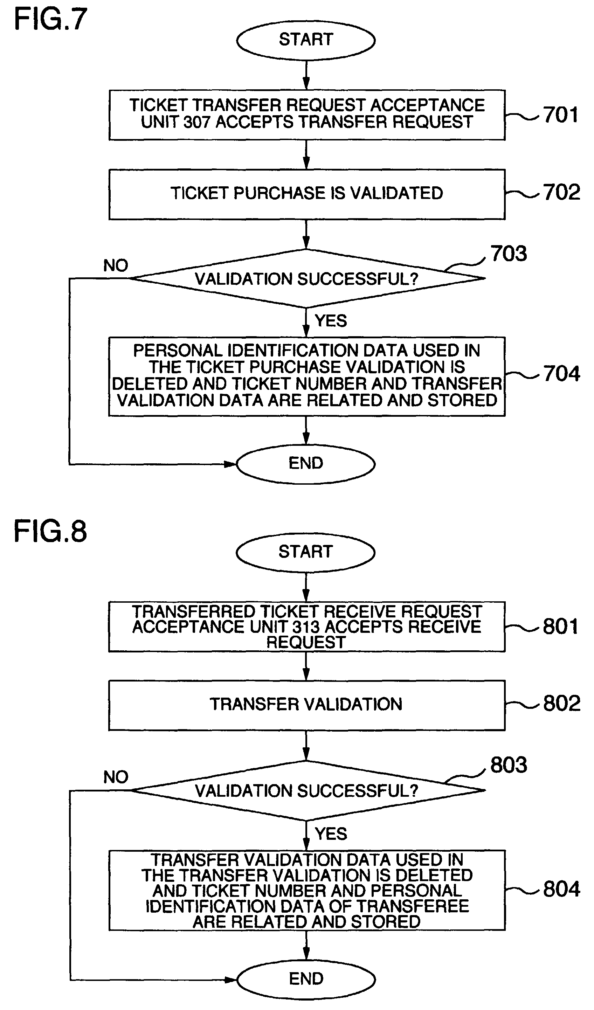

In the following, a method of transferring a ticket purchased by a consumer AA to a consumer BB under the assumption described above will be described. Figures 7 and 8 show processing performed by the ticket sales computer 101 to accept a ticket transfer request from the consumer AA and processing performed by the computer to accept a transferred ticket receive request from the consumer BB, respectively.

It is assumed that the consumer AA has already purchased a ticket and the personal identification data is stored in the table 303. At this time, the consumer AA accesses a ticket transfer request acceptance unit 307 via a communication means to call for a ticket transfer. The ticket transfer request acceptance unit 307 accepts a request from the consumer AA. This corresponds to step 701 in Figure 7.

Next, at step 702, the ticket transfer request acceptance unit 307 performs a ticket purchase completion validation to check whether the ticket number and the personal identification data presented by the consumer AA are related with each other in the table 303. Then if step 703 decides that the validation at step 702 is successfully completed, step 704 deletes the personal identification data from the table 303, relates the ticket number with the transfer validation data, which was sent from the consumer AA to authenticate the consumer BB, and stores them in a table 309. The ticket number is a number that can uniquely identify the ticket purchased by the consumer AA. The transfer validation data 311 shown in Figure 3 may be proposed by the consumer AA to the ticket transfer request acceptance unit 307 or may be generated and issued to the consumer AA by the ticket transfer request acceptance unit 307. In Figure 3 a column 310 and a column 311 are shown to be linked with each other in the table 309.

When step 703 decides that the validation at step 702 has failed, the ticket transfer request acceptance processing is aborted.

Then the consumer AA informs the consumer BB of the transfer validation data.

The consumer BB informed of the transfer validation data by the consumer AA uses a communication means to inform the ticket number and the transfer validation data to the transferred ticket receive request acceptance unit 313 and make a ticket transfer request to the unit. The transferred ticket receive request acceptance unit 313 at step 801 shown in Figure 8 accepts the transferred ticket receive request from the consumer BB.

Next, at step 802 the transferred ticket receive request acceptance unit 313, upon receiving the ticket receive request, performs a transfer validation to check whether the ticket number and the transfer validation data are linked with each other. When step 803 decides that the validation at step 802 is successfully completed, the unit 313 at step 804 registers a personal identification data 306 of the consumer BB inputted by the consumer BB instead of data of the consumer AA in the table 303 and deletes the pair of the ticket number and the transfer validation data (ABC) used by the consumer BB from the table 309. When passing through the gate 308, the consumer BB presents his or her personal identification data 306.

If at step 803 it is decided that the validation at step 802 has failed, the transferred ticket receive request acceptance processing is aborted.

In this embodiment, the personal identification data and transfer validation data and the ticket number are logically distinguished in order to uniquely identify the consumer BB who is to receive the ticket purchased by the consumer AA.

As described above, when the personal identification data stored in the ticket sales computer 203 of Figure 2 is used as a ticket that certifies that a consumer carrying it has the right to enter a concert hall, the purchased ticket can be transferred as in this embodiment.

By checking the personal identification data presented at the entrance gate of the concert hall against the personal identification data stored in the ticket sales computer 203, the ticket itself can be transferred. It is also possible to put in the same system the function of transferring the right to purchase a ticket in the first embodiment and the function of transferring a ticket in this embodiment.

Next, a third embodiment of the invention will be described.

In this embodiment, it is assumed as in the second embodiment that the personal identification data stored in the ticket sales computer 203 is used as a ticket that certifies that a consumer carrying it has the right to enter the concert hall and that a person is admitted to the concert hall by presenting his or her personal identification data at the entrance gate 205 of the concert hall. In the second embodiment the personal identification data may be proposed by a consumer to the ticket purchase request acceptance unit 302 or may be issued by the ticket purchase request acceptance unit 302 to the consumer. In the third embodiment, however, it is assumed that the consumer proposes the personal identification data to the ticket purchase request acceptance unit 302. This embodiment describes an authentication method performed at the entrance gate under the assumptions described above.

In Figure 2, the consumer AA uses a communication means 201 to access the ticket sales computer 203 to buy a ticket.

The ticket purchase is made up of two processing, one for paying a ticket fee and one for registering the personal identification data. The ticket fee may be paid into a bank account or directly at the counter of a ticket selling agent.

In the registration of the personal identification data, a card number embossed on the surface of a credit card owned by a consumer may be informed via the communication means 201.

When passing through the entrance gate 205 of the concert hall, the consumer present his or her credit card. The entrance gate 205 reads the card number contained in magnetic data of the credit card and checks it against the card number informed and, when they agree, allows the consumer to pass the gate.

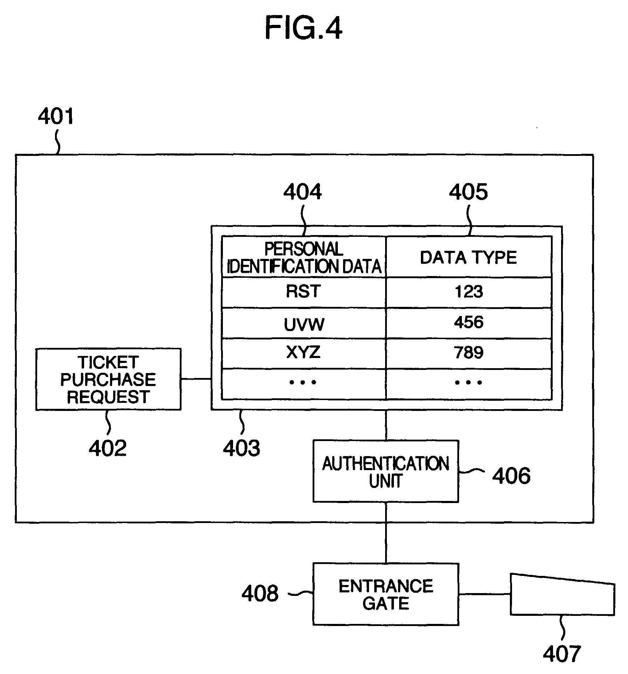

In the above procedure, the method of registering the personal identification data and authenticating a person at the entrance gate 205 will be explained by referring to Figure 4.

First, the registration of the personal identification data is done as follows.

A ticket purchase request acceptance unit 402 accepts a consumer request for buying a ticket.

At this time, the consumer notifies a card number of the credit card to the unit. The notification of the card number may be done orally (i.e., through voice) or by pressing an input button of the communication means 201. In another embodiment, the communication means 201 may include a reader of the credit card data thereby to read the card number from it for this purpose. The ticket purchase request acceptance unit 402 stores the card number in a table 403.

Next, the method of authenticating a person at the entrance gate 408 (205 in Figure 2) will be explained.

At the entrance gate 408 of the concert hall is installed a reader/writer 407 that reads a magnetic stripe.

The entrance gate 408 reads by the reader/writer 407 the magnetic stripe of the credit card presented by the consumer and extracts the card number from the magnetic data.

The entrance gate 408 sends the card number thus read out to an authentication unit 406.

The authentication unit 406 refers to a table 403 to check whether the card number received from the entrance gate 408 is contained in the table 403. When the card number exists, the person is authenticated as the one who has purchased the ticket. If the card number is not included in the table, the authentication fails. The authentication unit 406 informs the result of authentication to the entrance gate 408.

The entrance gate 408 admits the consumer to the concert hall when the authentication is successful and, when unsuccessful, denies him admission. Although the extraction of the card number from the magnetic data is performed by the entrance gate 408, it is possible to send all the magnetic data to the authentication unit 406 which in turn extracts the card number from the magnetic data.

Although a credit car is used here, a bank card (cash card) may be used in stead of the credit card to register the personal identification data in a similar manner. The authentication can also be done in the same way.

While the magnetic stripe information of the credit card is read here, it is possible to use an IC card reader/writer instead of the magnetic stripe reader/writer 407 to read information on an IC chip of the IC credit card or bank card and use the information as the personal identification data.

Further, a floppy disk rather than a credit card may be used for a consumer to store and register his personal identification data in a predetermined file in a predetermined format. When the consumer passes a gate, a floppy disc drive may be used as the reader/writer 407 to read the personal identification data, thereby performing the authentication.

When a card number of credit card or bank card is used as the personal identification data, it is possible to pay the ticket fee using the card number when the consumer buys a ticket.

Further, the entrance gate 408 may employ a plurality of means for authentication. For example, two kinds of means, credit card and bank card, may be used to perform authentication as follows.

First, the magnetic stripe reader/writer 407 installed in the entrance gate 408 is provided with a function of reading magnetic stripes of both credit card and bank card. It is also provided with a switch used to specify whether the inserted card is a credit card or bank card.

A consumer is informed in advance that either type of personal identification data can be accepted for the authentication.

At the same time, during the registration of the personal identification data, the consumer reports to the ticket purchase request acceptance unit 402 the type of data indicating whether the personal identification data is that of credit card or bank card. For example, when the consumer decides to use a credit card, he reports to the unit a card number and a data type, which is a credit card data.

Suppose a consumer inserts his credit card into the reader/writer 407 at the entrance gate 408 for admission to a concert hall. At this time, the consumer operates the switch to indicate that the card is a credit card.

The reader/writer 407 reads the magnetic stripe information from the inserted credit card. At this time, because the reader/writer 407 has received an input from the switch which indicates that the data type is a credit card data, it knows the position and format of the magnetic stripe and thus can extract the card number from the magnetic stripe information. Then, the extracted card number is reported along with the data type to the authentication unit 406.

The authentication unit 406 checks whether the personal identification data related with the reported data type exists in the table 403 and, if it exists, decides that the authentication is successful and, if not, decides that the authentication fails. The authentication unit 406 informs the result of authentication to the entrance gate 408.

When the data type can be identified from the characteristic of the personal identification data read from the reader/writer 407 (e.g., data format and whether the magnetic stripe is on the front or back of the card), the consumer does not need to register the data type. Nor does the ticket purchase request acceptance unit 402 need to relate the personal identification data with the data type. It is also not necessary to provide the reader/writer 407 with a switch for entering the data type.

With this embodiment, the authentication can be made by using a medium already owned by a consumer, such as a credit card, without having to become a member for ticket purchase beforehand and own a dedicated medium, such as an IC card loaded with a dedicated ticket program.

Further, when a credit card or bank card is used, payment can be made by using the embossed data that is registered as the personal identification data.

Further, automating the reading of a medium containing the personal identification data will lead to labor saving and allow a consumer carrying a transferred ticket to swiftly pass an unattended gate.

## Claims

1. A ticket sales management program for computers comprising the steps of:
according to a ticket purchase request, relating a ticket (107, 304) with ticket purchaser identification data (108, 305) and then storing them;
according to a ticket transfer request entered by the ticket purchaser, relating transferee identification data (112, 311) with the ticket (111, 310);
according to an input from a transferee of a receive request, a ticket number and personal identification data, checking whether the personal identification data is assigned to the ticket; and
when the result of the above check step indicates that the personal identification data is included in the transferee identification data related with the ticket, assigning a purchaser identification data of the transferee inputted by the transferee to the ticket purchaser identification data (108, 305) related with the ticket to authenticate the transferee.

2. A ticket sales management method using computers, comprising the steps of:
according to a ticket purchase request, relating a ticket (107, 304) with ticket purchaser identification data (108, 305) and then storing them;
according to a ticket transfer request entered by the ticket purchaser, relating transferee identification data (112) with the ticket (111);
according to an input from a transferee of a receive request, a ticket number and personal identification data, checking whether the personal identification data is assigned to the ticket; and
when the result of the above check step indicates that the personal identification data is included in the transferee identification data related with the ticket, assigning a purchaser identification data of the transferee inputted by the transferee to the ticket purchaser identification data (108, 305) related with the ticket to authenticate the transferee.

3. A medium for computers storing a ticket sales management program, comprising the steps of:
according to a ticket purchase request, relating a ticket (107, 304) with ticket purchaser identification data and (108, 305) then storing them;
according to a ticket transfer request entered by the ticket purchaser, relating transferee identification data (112) with the ticket (111);
according to an input from a transferee of a receive request, a ticket number and personal identification data, checking whether the personal identification data is assigned to the ticket; and
when the result of the above check step indicates that the personal identification data is included in the transferee identification data related with the ticket, assigning a purchaser identification data of the transferee inputted by the transferee to the ticket purchaser identification data (305) related with the ticket to authenticate the transferee.

4. The invention of any preceding claim, including the step of utilising the transferee identification data, instead of the ticket purchaser identification data related with the ticket, as an admittance condition for a person carrying the ticket to enter the hall.

5. The invention of preceding claim, further including the sub-step of checking whether the ticket transfer request includes the ticket purchaser identification data related with the ticket.

6. The invention of claim 5, including the step of checking the transferee identification data, instead of the ticket purchaser identification data related with the ticket, as an admittance condition for a person carrying the ticket to enter the hall.

7. The invention of claim 5, including the step of sending to a gate of a hall the transferee identification data, instead of the ticket purchaser identification data related with the ticket, as an admittance condition for a person carrying the ticket to enter the hall.

8. A ticket sales management system comprising:
a table to relate, according to a ticket purchase request, a ticket (107, 304) with ticket purchaser identification data (108, 305) and then store them; and
a table to relate, according to a ticket transfer request entered by the ticket purchaser, transferee identification data (112) with the ticket (111);
wherein a purchaser identification data of the transferee is assigned to the ticket and said system further comprises means which checks the ticket purchaser identification data related with the ticket, as an admittance condition for a person carrying the ticket to enter the hall.

9. A computer for managing ticket sales information comprising:
a device to relate a ticket with first data for authenticating a ticket purchase right holder and record them;
a device to accept second input data from outside, authenticate, based on the first data, a person represented by the second input data to be the ticket purchase right holder and, when the authentication is successful, relate a ticket transfer request included in the second input data with a transferee and record them; and
a device to accept third input data from outside, check whether the input data corresponds to the transferee, when it decides that the input data corresponds to the transferee, delete from a record the ticket purchase right holder linked with a ticket purchase right holder change condition, and relate the ticket that was linked with the deleted ticket purchase right holder with newly input data used to authenticate the transferee and record them.

10. A gate equipment provided at entrance of a hall and connected to a ticket sales management system comprising:
a table to relate, according to a ticket purchase request, a ticket with ticket purchaser identification data and then store them; and
a table to relate, according to a ticket transfer request entered by the ticket purchaser, transferee identification data with the ticket, wherein said gate works on the basis of a result of checking the transferee identification data as an admittance condition.
